# EUROPEAN PATENT SPECIFICATION

(11) **EP 2 730 482 B1**
(45) Date of publication and mention of the grant of the patent: **30.12.2015**
(21) Application number: 12192460.9
(22) Date of filing: 13.11.2012
(51) Int. Cl.: B62D 1/28, B62B 5/00, B62B 3/12, A63B 55/00

(54) **Remote-controlled electric golf bag cart**
Ferngesteuerter elektrischer Golftaschenwagen
Chariot de golf électrique télécommandé

(43) Date of publication of application: 14.05.2014
(73) Proprietor: Tung Thih Electronic Co., Ltd., Taoyuan County (TW)
(72) Inventor: Liu, Yu-Hsin, Luchu Township Taoyuan County (TW); Chang, Chen-Hui, Luchu Township Taoyuan County (TW); Kuo, Shun-Lin, Luchu Township Taoyuan County (TW); Chiang, Shih-Tsung, Luchu Township Taoyuan County (TW)
(74) Representative: Caldwell, Judith Margaret

(56) References cited:
- WO-A1-99/12793
- GB-A- 2 283 838
- US-A- 4 109 186
- US-A- 5 137 103
- US-B1- 7 353 089

## Description

### 1. Field of the Invention

The present invention relates to a golf bag cart and more particularly to a remote-controlled electric golf bag cart.

### 2. Description of the Related Art

Golf bag carts primarily serve to carry golf equipment so that golf players do not need to carry heavy golf equipment when walking in the golf fields and golf skill practice will not be affected for sake of the additional physical strength consumption.

Nowadays, lots of electric golf bag carts have been available in the market. Disclosed by Taiwanese utility model patent publication no. 304440, a hand-controlled electric golf bag cart has a motor for driving a wheel assembly, and a control button mounted on a handle of the cart to control the motor. After pressing the control button to control the motor so as to drive the wheel assembly, users do not need to manually keep the golf bag cart moving by themselves. Due to rapid technological progress recent years, an automatic searching and tracking electric golf bag cart came on the market and has an ultrasonic radar and a master controller mounted thereon. The master controller is connected to the ultrasonic radar for the ultrasonic radar to transmit an ultrasonic signal toward a forward direction of the electric golf bag cart. Because of the concept that ultrasonic waves reflect from an object, the master controller can determine a distance and an orientation between the electric golf bag cart and an object in front of the cart according to an ultrasonic signal and its reflected signal, and drives a motor to rotate according to the measured distance so that the electric golf bag cart follows the object ahead and keeps a preset distance from the object (for example 4 to 6 meters). Hence, when a golf player is walking ahead of the electric golf bag cart, the electric golf bag cart then automatically follows the golf player, and such electric golf bag cart is relatively convenient than those conventional electric golf bag carts.

However, as the foregoing electric golf bag cart measures the distance between itself and an object ahead with ultrasonic waves, to some extent, its operation may be affected by objects other than the golf player. If other persons or balls pass between the electric golf bag cart and the person ahead of the cart, such event will result in malfunctions of the electric golf bag cart, for example, the electric golf bag cart stops following or follows a wrong person, and thus make such electric golf bag cart unsatisfactory in operation.

An objective of the present invention is to provide a remote controlled electric golf bag cart being immune from the interference caused by surrounding persons and obstacle.

There are several relevant golf bag carts disclosed in the following conventional techniques as references.

US 4,109,186, entitled "Self-propelled golf cart", discloses a conventional radio-controlled guidance and speed control system for a vehicle having spaced receivers for receiving magnetic energy signals from a movable energy source. The signals received vary in accordance with the position of the receivers with respect to the energy source, and are electrically processed to control separate motors driving two wheels of the vehicle for starting, stopping and direction controlling.

WO 99/12793, entitled "Method and apparatus for controlling robotic golf caddy apparatus", discloses a conventional robotic golf caddy apparatus movably supported on a steering assembly and including a communications assembly for communicating with a GPS system and a central control station in order to guide and steer the apparatus around designated accessible areas of a golf course. The apparatus also includes a dead reckoning system with a distance determination device and compass for determining the distance the caddy travels should the communications assembly lose communication with a predetermined minimum number of satellites in the GPS system.

US 7,353,089, entitled "Method and system for a signal guided motorized vehicle", discloses a conventional motorised cart that supports one or more golf bags and automatically follows a golfer around the golf course from hole to hole. The golfer wears or carries a signal transmitter that emits a signal that is received by the motorised cart and then used by the motorised cart to stay within a predetermined range of the golfer.

US 5,137,103, entitled "Remote controlled golf bag", discloses a conventional remote controlled golf cart consisting of two rear wheels and a front wheel mounted on a tricycle-type chassis. The rear wheels are coupled to a battery operated electric motor that drives them simultaneously. The front wheel is controlled by a motor driven worm device that turns the front wheel to the right or the left. A remote control is used to operate the motor, which typically has a rheostat. The remote control is a radio signal transmitter and receivers re operably coupled to the drive motor and the directional motor.

GB 2,283,838, entitled "Motorized carriers", discloses a conventional automatic motorised golf trolley having control means arranged to maintain a fixed separation distance between the trolley and the golfer. The trolley is provided with an ultrasonic transmitter and a directional receiver, the transmitter being arranged to transmit an identification code that is received by a remote unit attached to the golfer. The remote control unit comprises an ultrasonic receiver that receives transmitted signals, comparison means for comparing a received signal against a stored code, and means for transmitting, via a transmitter mounted on the remote control unit, a carrier control signal for reception by the receiver of the trolley.

### 3. Summary of Invention

To achieve the foregoing objective, the remote-controlled electric golf bag cart of the present invention has a remote control transmitting a distance measurement signal; a support frame having a wheel assembly, a golf bag stand and a motor assembly, wherein the motor assembly is connected with the wheel assembly to drive the wheel assembly; and an antenna set mounted on the support frame, having multiple antenna units facing to at least a front side, a left side, a right side of the support frame, and receiving the distance measurement signal transmitted from the remote control with the antenna units; the remote-controlled golf bag cart further comprising: a set of ultrasonic transceivers mounted on a bottom of the front side of the support frame, transmitting ultrasonic waves to the ground and receiving reflected waves; and a control module mounted on the support frame, electrically connected to the antenna set and the motor assembly, and setting a minimum distance, determining an orientation of the remote control with respect to the antenna set after acquiring the distance measurement signal received from the antenna set, calculating a distance between the remote control and the antenna set, and comparing the distance with the minimum distance, and if the distance is greater than the minimum distance, controlling the motor assembly to drive the wheel assembly for the support frame to approach the remote control, the control module having an ultrasonic control unit electrically connected to the set of ultrasonic transceivers, calculating a distance of the set of ultrasonic transceivers above the ground after the set of ultrasonic transceivers transmits an ultrasonic wave and receives a reflected wave, and outputting the distance above the ground; and
a body control module (BCM) electrically connected to the motor assembly and the ultrasonic control unit, built in with a maximum distance to the ground and a minimum distance to the ground, continuously receiving a distance above the ground and comparing the distance above the ground with the maximum distance to the ground and the minimum distance to the ground when the motor assembly drives the support frame to move forward, controlling the motor assembly to continuously drive the support frame to move forward when the distance above ground falls between the maximum distance to the ground and the minimum distance to the ground, stopping the support frame from moving and selectively driving the motor assembly to make a turn when determining the distance above the ground is more than the maximum distance to the ground or less than the minimum distance to the ground.

As the remote control is carried by a user, the control module of the remote controlled electric golf bag cart determines an orientation of the remote control with respect to the antenna set and a distance therebetween according to the distance measurement signal without being interfered by other persons or obstacles. Accordingly, the control module controls the motor assembly to drive the wheel assembly so that the support frame will not follow a wrong person or miscalculate the distance during a following course.

Other objectives, advantages and novel features of the invention will become more apparent from the following detailed description when taken in conjunction with the accompanying drawings.

### IN THE DRAWINGS

Fig. 1 is a partial perspective view of a remote-controlled electric golf bag cart in accordance with the present invention;
Fig. 2 is a functional block diagram of the remote-controlled electric golf bag cart in Fig. 1;
Fig. 3 is a partially enlarged top view of the remote-controlled electric golf bag cart in Fig. 1;
Fig. 4 is a first operation side view of the remote-controlled electric golf bag cart in Fig. 1 when detecting a distance to the ground;
Fig. 5 is a second operation side view of the remote-controlled electric golf bag cart in Fig. 1 when detecting a distance to the ground;
Fig. 6 is a third operation side view of the remote-controlled electric golf bag cart in Fig. 1 when detecting a distance to the ground; and
Fig. 7 is an operation side view of the remote-controlled electric golf bag cart in Fig. 1 when following a person with a remote control.

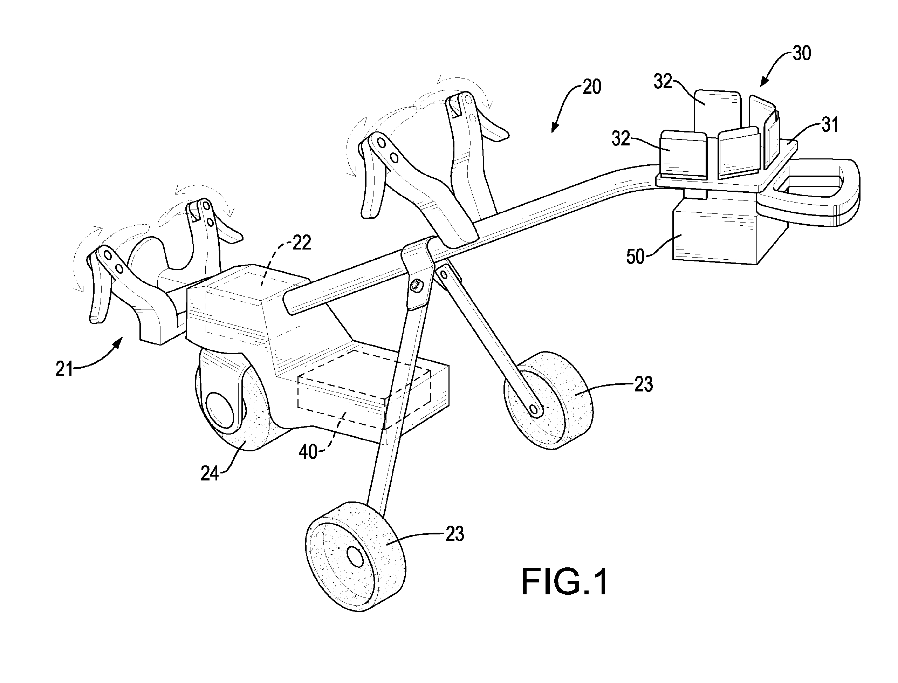

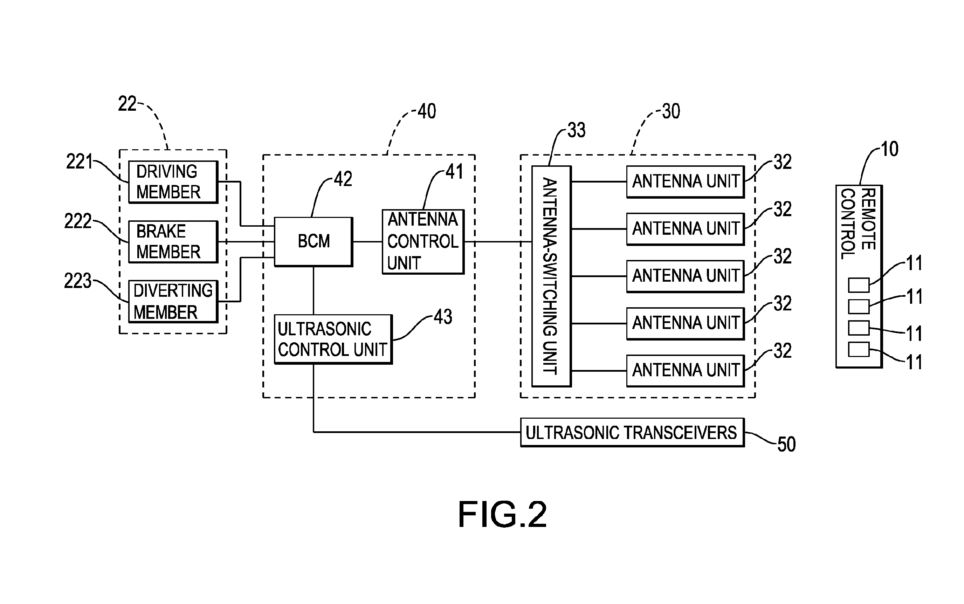

With reference to Figs. 1 and 2, a remote-controlled electric golf bag cart in accordance with the present invention has a remote control 10, a support frame 20, an antenna set 30 and a control module 40.

The remote control 10 serves to transmit a distance measurement signal. In the present embodiment, the remote control 10 is built in with an acceleration command, a deceleration command, a left turn command and a right turn command. The remote control 10 has multiple buttons 11 to correspond to the acceleration command, the deceleration command, the left turn command and the right turn command for users to issue a corresponding command after operating the remote control 10.

The support frame 20 has a wheel assembly, a golf bag stand 21 and a motor assembly 22. The motor assembly 22 is connected with the wheel assembly to drive the wheel assembly. In the present embodiment, the wheel assembly has a set of front wheels 23 and a rear wheel 24. The motor assembly 22 is connected with the rear wheel 24 and has a driving member 221, a brake member 222 and a diverting member 223. The driving member 221 drives the rear wheel 24 to rotate. The brake member 222 stops the rear wheel 24 from rotating. The diverting member 223 changes a moving direction of the rear wheel 24.

The antenna set 30 is mounted on the support frame 20 and receives a distance measurement signal transmitted from the remote control 10 and has multiple antenna units 32 facing to at least the front side, the left side, the right side of the support frame 20. The antenna units 32 serve to receive the distance measurement signals transmitted from the remote control 10 and their detailed structure is described later. In the present embodiment, each antenna unit 32 is a panel antenna, and the antenna set 30 further receives the acceleration command, the deceleration command, the left turn command and the right turn command transmitted from the remote control 10.

The control module is mounted on the support frame 20, is electrically connected to the antenna set 30 and the motor assembly 22, and sets a minimum distance. After acquiring the distance measurement signal received from the antenna set 30, the control module 40 determines an orientation of the remote control 10 with respect to the antenna set 30, calculates a distance between the remote control 10 and the antenna set 30, and compare the distance with the minimum distance. If the distance is greater than the minimum distance, the control module 40 controls the motor assembly 22 to drive the wheel assembly so that the support frame 20 approaches the remote control 10 to maintain the distance between the antenna set 30 and the remote control 10 to be not less than the minimum distance.

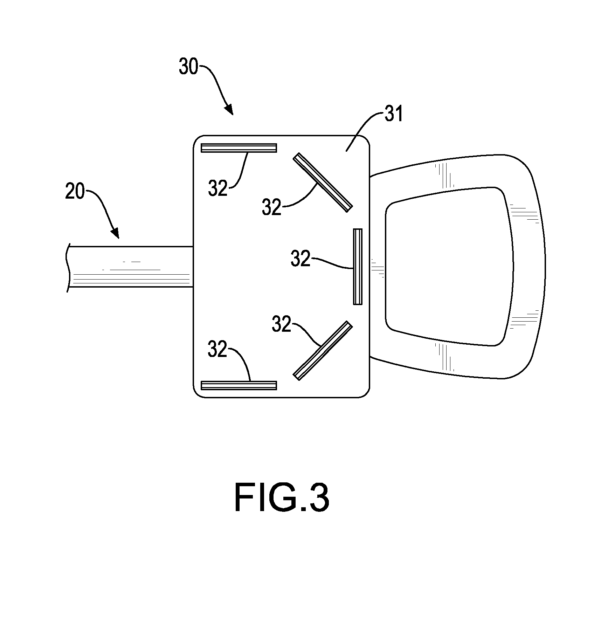

The detailed structure of the antenna set 30 is further described as follows. The antenna set 30 has a mounting base 31, multiple antenna units 32 and an antenna-switching unit 33. The mounting base 31 is securely mounted on a top of a front end of the support frame 20. The antenna units 32 are securely and erectly mounted on the mounting base 31, and respectively face to the front side, the left side, the right side, the left front side and the right front side of the support frame 20 as shown in Fig. 3. The antenna-switching unit 33 is electrically connected to the antenna units 32.

The control module 40 has an antenna control unit 41 and a body control module (BCM) 42.

The antenna control unit 41 is electrically connected to the antenna-switching unit 33 to acquire the distance measurement signals received from the respective antenna units 32. After detecting a field strength of the received distance measurement signal from each antenna unit 32, the antenna control unit 41 determines an orientation of the remote control 10 with respect to the antenna set 30 according to the field strength of the received distance measurement signal of each antenna unit 32, calculates the distance between the remote control 10 and the antenna set 30, and outputs a corresponding orientation datum and a corresponding distance datum.

The BCM 42 is electrically connected to the antenna control unit 41 and the driving member 221, the brake member 222 and the diverting member 223 of the motor assembly 22, and is built in with the minimum distance. After receiving the orientation datum and the distance datum outputted from the antenna control unit 41, the BCM 42 determines if a distance corresponding to the distance datum is greater than the minimum distance, if positive, drives the driving member 221 and the diverting member 223 of the motor assembly 22 for the support frame 20 to move forward toward an orientation of the remote control 10 corresponding to the orientation datum, keeps receiving the orientation datum and the distance datum, and if a distance corresponding to the received distance datum is not greater than the minimum distance, activates the brake member 222 of the motor assembly 22 to stop the support frame 20 from moving forward.

The antenna control unit 41 that determines the orientation and the distance between the remote control 10 and the antenna set 30 according to the field strength of the received distance measurement signal of each antenna unit 32 can detect a received signal strength indicator (RSSI) value of the received distance measurement signal of each antenna unit 32, and is built in with a back propagation network to acquire the orientation datum and the distance datum corresponding to the received RSSI values of each antenna unit 32 inputted to the back propagation network.

The BCM 42 is built in with multiple speed levels and drives the driving member 221 according to one of the speed levels. When receiving the acceleration command transmitted from the remote control 10, the BCM 42 increases the moving speed of the driving member 221 from the current speed level to a next higher speed level. Preferably, the speeds per hour corresponding to the speed levels may be set to 1.5 km/hour, 3 km/hour, 4.5 km/hour and the like. Similarly, when receiving the deceleration command transmitted from the remote control 10, the BCM 42 decreases the moving speed of the driving member 221 from the current speed level to a next lower speed level. When receiving the left turn command or the right turn command transmitted from the remote control 10, the BCM 42 drives the diverting member 223 for the support frame 20 to make a left turn or a right turn.

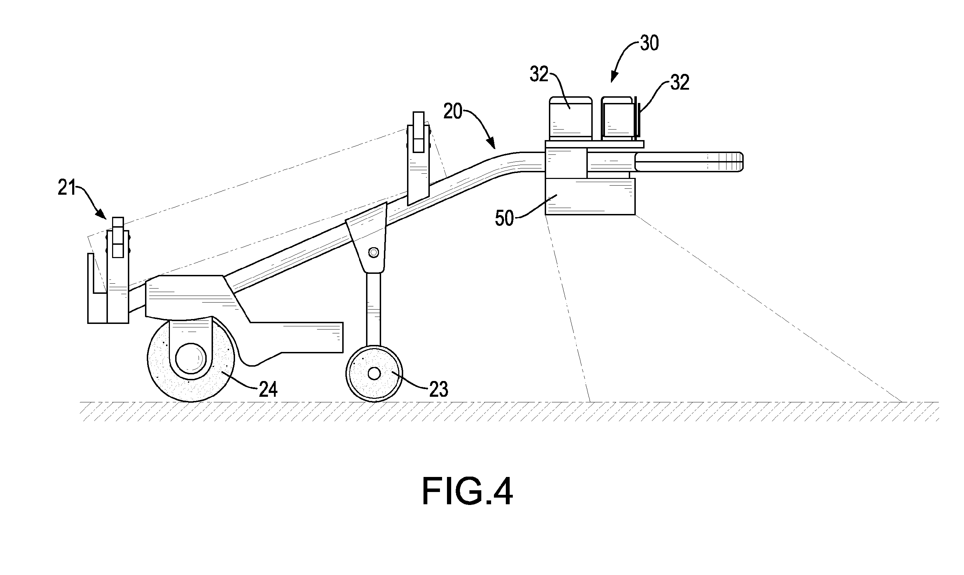

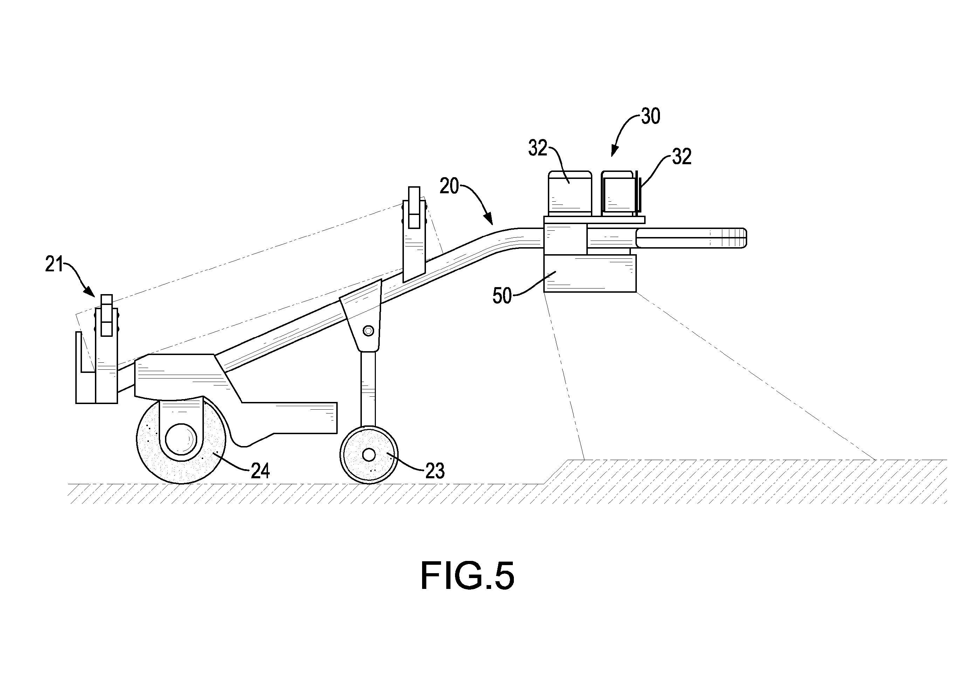

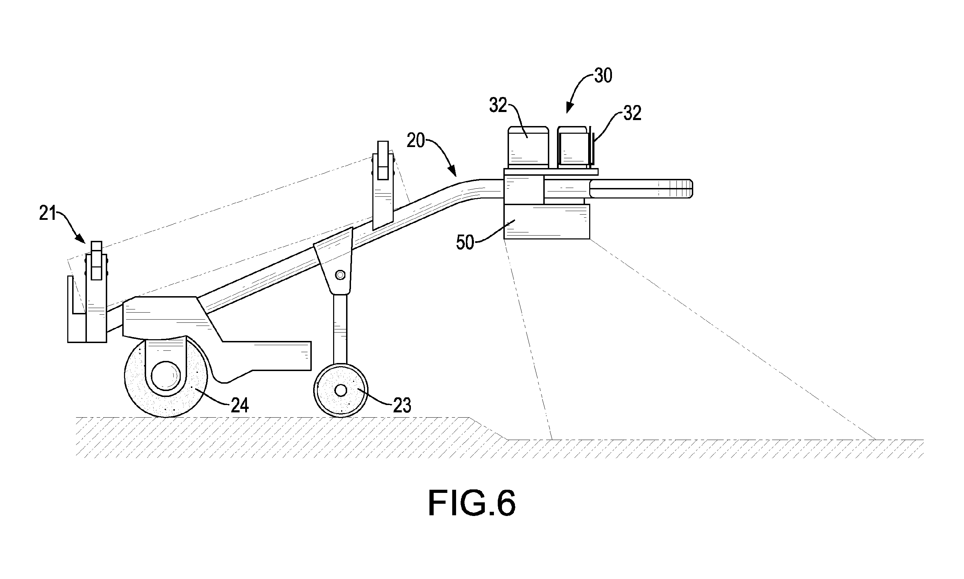

As the ground condition of a golf field may be rough, to let the remote-controlled electric golf bag cart automatically stay away from a bumpy area on the road, the remote-controlled electric golf bag cart further has a set of ultrasonic transceivers 50 mounted on a bottom of the front end of the support frame 20, transmitting ultrasonic waves to the ground and receiving reflected waves. The control module 40 further has an ultrasonic control unit 43. The BCM 42 is further built in with a maximum distance to the ground and a minimum distance to the ground. The ultrasonic control unit 43 is electrically connected to the set of ultrasonic transceivers 50 and the BCM 42, calculates a distance of the set of ultrasonic transceivers 50 above the ground after the set of ultrasonic transceivers 50 transmits an ultrasonic wave and receives a reflected wave, and outputs the distance above the ground to the BCM 42. When the motor assembly 22 drives the support frame 20 to move forward, the BCM 42 continuously receives the distance above the ground and compares it with the maximum distance to the ground and the minimum distance to the ground. With reference to Figs. 4 to 6, when the distance above the ground falls between the maximum distance to the ground and the minimum distance to the ground, the BCM 42 controls the motor assembly 22 to continuously drive the support frame 20 to move forward and follow the remote control 10. When the distance above the ground is less than the minimum distance to the ground, it indicates a bump in the road. When the distance above the ground is more than the maximum distance to the ground, it indicates a pit in the road. Hence, when determining the distance above the ground is more than the maximum distance to the ground or less than the minimum distance to the ground, the BCM 42 stops the support frame 20 from moving and selectively drives the diverting member 223 to make a turn so as to stay away from the bump or the pit.

Besides, the distance measurement signal transmitted from the remote control 10 is a radio signal in the 2.4 GHz ISM band.

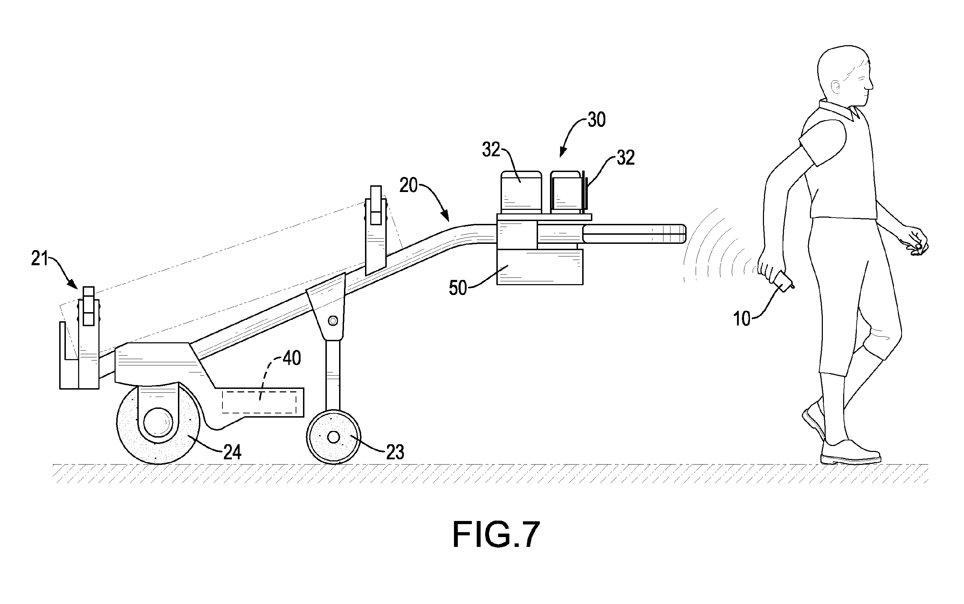

With reference to Fig. 7, when the remote-controlled golf bag cart is operated, the remote control 10 can be carried on a user's body. The control module 40 mounted in the support frame 20 determines an orientation of the remote control 10 with respect to the remote control 10 according to the distance measurement signal transmitted from the remote control 10 and calculates a distance therebetween so that the orientation and distance of the user relative to the support frame 20 can be obtained. Such acquisition of the distance and orientation of the remote control is not affected by other persons between the remote control 10 and the support frame 20. The antenna control unit 41 in the control module 40 can accurately acquire the orientation and distance of a target, that is, a user carrying the remote control 10, to be followed. After receiving the orientation datum and the distance datum, the BCM 42 then drives the support frame 20 to move forward toward the remote control 10 to achieve the purpose that the remote-controlled electric golf bag cart accurately follows a user. Based on the mechanism using ultrasonic waves to detect a distance to the ground, the remote-controlled electric golf bag cart can automatically stay away from a bumpy road condition to prevent itself from being stuck in a pit, blocked by stairs or damaged by road condition during the following course.

In sum, the remote-controlled electric golf bag cart can get rid of the influence of other persons or obstacles in the field, which may result in incorrect determination of the orientation and distance to the target to be followed, to accurately follow the user carrying the remote control, thereby providing a smoother operation.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A remote-controlled electric golf bag cart comprising:
a remote control (10) transmitting a distance measurement signal;
a support frame (20) having a wheel assembly, a golf bag stand (21) and a motor assembly (22), wherein the motor assembly (22) is connected with the wheel assembly to drive the wheel assembly; and
an antenna set (30) mounted on the support frame (20), having multiple antenna units (32) facing to at least a front side, a left side, a right side of the support frame (20), and receiving the distance measurement signal transmitted from the remote control (10) with the antenna units (32);
the remote-controlled electric golf bag cart further comprising:
a set of ultrasonic transceivers (50) mounted on a bottom of the front side of the support frame (20), transmitting ultrasonic waves to the ground and receiving reflected waves; and
a control module (40) mounted on the support frame (20), electrically connected to the antenna set (30) and the motor assembly (22), and setting a minimum distance, determining an orientation of the remote control (10) with respect to the antenna set (30) after acquiring the distance measurement signal received from the antenna set (30), calculating a distance between the remote control (10) and the antenna set (30), and comparing the distance with the minimum distance, and if the distance is greater than the minimum distance, controlling the motor assembly (22) to drive the wheel assembly for the support frame (20) to approach the remote control (10), the control module having:
an ultrasonic control unit (43) electrically connected to the set of ultrasonic transceivers (50), calculating a distance of the set of ultrasonic transceivers (50) above the ground after the set of ultrasonic transceivers (50) transmits an ultrasonic wave and receives a reflected wave, and outputting the distance above the ground; and
a body control module (BCM) (42) electrically connected to the motor assembly (22) and the ultrasonic control unit (43), built in with a maximum distance to the ground and a minimum distance to the ground, continuously receiving a distance above the ground and comparing the distance above the ground with the maximum distance to the ground and the minimum distance to the ground when the motor assembly (22) drives the support frame (20) to move forward, controlling the motor assembly (22) to continuously drive the support frame (20) to move forward when the distance above ground falls between the maximum distance to the ground and the minimum distance to the ground, stopping the support frame (20) from moving and selectively driving the motor assembly (22) to make a turn when determining the distance above the ground is more than the maximum distance to the ground or less than the minimum distance to the ground.

2. The remote-controlled electric golf bag cart as claimed in claim 1, wherein
the wheel assembly has a set of front wheels (23) and a rear wheel (24); and
the motor assembly (22) is connected with the rear wheel (24) and has:
a driving member (221) driving the rear wheel (24) to rotate;
a brake member (222) stopping the rear wheel (24) from rotating; and
a diverting member (223) changing a moving direction of the rear wheel (24).

3. The remote-controlled electric golf bag cart as claimed in claim 1, wherein the antenna set (30) has:
a mounting base (31) securely mounted on a top of a front side of the support frame (20);
multiple antenna units (32) securely and erectly mounted on the mounting base (31), and respectively facing to the front side, the left side, the right side, a left front side and a right front side of the support frame (20); and
an antenna-switching unit (33) electrically connected to the antenna units (32).

4. The remote-controlled electric golf bag cart as claimed in claim 3, wherein
the control module (40) has an antenna control unit (41) electrically connected to the antenna-switching unit (33) to acquire the distance measurement signals received from the respective antenna units (32), determining an orientation of the remote control (10) with respect to the antenna set (30) according to a field strength of the received distance measurement signal of each antenna unit (32) after detecting the field strength of the received distance measurement signal from each antenna unit (32), calculating the distance between the remote control (10) and the antenna set (30), and outputting a corresponding orientation datum and a corresponding distance datum; and
the BCM (42) is electrically connected to the antenna control unit (41) and the driving member (221), the brake member (222) and the diverting member (223) of the motor assembly (22), and built in with the minimum distance, determining if a distance corresponding to the distance datum is greater than the minimum distance after receiving the orientation datum and the distance datum outputted from the antenna control unit (41), if positive, driving the driving member (221) and the diverting member (223) of the motor assembly (22) for the support frame (20) to move forward toward an orientation of the remote control (10) corresponding to the orientation datum, keeping receiving the orientation datum and the distance datum, and if a distance corresponding to the received distance datum is not greater than the minimum distance, activating the brake member (222) of the motor assembly (22) to stop the support frame (20) from moving forward.

5. The remote-controlled electric golf bag cart as claimed in any one of claims 2 to 4, wherein
the remote control (10) is built in with an acceleration command and a deceleration command and has multiple buttons (11) to correspond to the acceleration command and the deceleration command so that the remote control (10) is operated to transmit the acceleration command or the deceleration command and the antenna set (30) receives the acceleration command or the deceleration command transmitted from the remote control (10); and
the BCM (42) is built in with multiple speed levels and drives the driving member (221) according to one of the speed levels, increases a moving speed of the driving member (221) from a current speed level to a next higher speed level when receiving the acceleration command transmitted from the remote control (10), and decreases the moving speed of the driving member (221) from the current speed level to a next lower speed level when receiving the deceleration command transmitted from the remote control (10).

6. The remote-controlled electric golf bag cart as claimed in any one of claims 2 to 5, wherein
the remote control (10) is built in with a left turn command and a right turn command and has multiple buttons (11) to correspond to the left turn command and the right turn command so that the remote control (10) is operated to transmit the left turn command or the right turn command and the antenna set (30) receives the left turn command or the right turn command transmitted from the remote control (10); and
the BCM (42) drives the diverting member (223) to turn the support frame (20) to the left or to the right when receiving the left turn command or the right turn command transmitted from the remote control (10).

7. The remote-controlled electric golf bag cart as claimed in claim 5 or 6, wherein the distance measurement signal transmitted from the remote control (10) is a radio signal in the 2.4 GHz ISM band.

## Patentansprüche

1. Ferngesteuerter elektrischer Golftaschenwagen, umfassend:
eine Fernbedienung (10), die ein Entfernungsmesssignal sendet;
einen Tragrahmen (20), der eine Räderanordnung, einen Golftaschenständer (21) und eine Motoranordnung (22) aufweist, wobei die Motoranordnung (22) mit der Räderanordnung verbunden ist, um die Räderanordnung anzutreiben; und
ein Antennenset (30), das auf dem Tragrahmen (20) befestigt ist, mehrere Antenneneinheiten (32) aufweist, die wenigstens einer Vorderseite, einer linken Seite, einer rechten Seite des Tragrahmens (20) zugewandt sind, und mit den Antenneneinheiten (32) das von der Fernbedienung (10) gesendete Entfernungsmesssignal empfängt;
wobei der ferngesteuerte elektrische Golftaschenwagen weiterhin umfasst:
ein Set von Ultraschallsendeempfängern (50), das an einer Unterseite der Vorderseite des Tragrahmens (20) befestigt ist, Ultraschallwellen zum Boden aussendet und reflektierte Wellen empfängt; und
ein Steuermodul (40), das auf dem Tragrahmen (20) befestigt ist, elektrisch mit dem Antennenset (30) und der Motoranordnung (22) verbunden ist und eine Mindestentfernung einstellt, nach dem Erfassen des von dem Antennenset (30) empfangenen Entfernungsmesssignals eine Ausrichtung der Fernbedienung (10) bezogen auf das Antennenset (30) bestimmt, eine Entfernung zwischen der Fernbedienung (10) und dem Antennenset (30) berechnet und die Entfernung mit der Mindestentfernung vergleicht und, wenn die Entfernung größer ist als die Mindestentfernung, die Motoranordnung (22) ansteuert, um die Räderanordnung für den Tragrahmen (20) so anzutreiben, dass sie sich der Fernbedienung (10) nähert, wobei das Steuermodul Folgendes aufweist:
eine Ultraschallsteuereinheit (43), die elektrisch mit dem Set von Ultraschallsendeempfängern (50) verbunden ist, eine Entfernung des Sets von Ultraschallsendeempfängern (50) über dem Boden berechnet, nachdem das Set von Ultraschallsendeempfängern (50) eine Ultraschallwelle aussendet und eine reflektierte Welle empfängt, und die Entfernung über dem Boden ausgibt; und
ein Körpersteuermodul (body control module, BCM) (42), das elektrisch mit der Motoranordnung (22) und der Ultraschallsteuereinheit (43) verbunden ist, mit einer Höchstentfernung zum Boden und einer Mindestentfernung zum Boden eingebaut ist, kontinuierlich eine Entfernung über dem Boden empfängt und die Entfernung über dem Boden mit der Höchstentfernung zum Boden und der Mindestentfernung zum Boden vergleicht, wenn die Motoranordnung (22) den Tragrahmen (20) so antreibt, dass er sich vorwärts bewegt, die Motoranordnung (22) ansteuert, um den Tragrahmen (20) kontinuierlich so anzutreiben, dass er sich vorwärts bewegt, wenn die Entfernung über dem Boden zwischen die Höchstentfernung zum Boden und die Mindestentfernung zum Boden fällt, beim Bestimmen, dass die Entfernung über dem Boden größer ist als die Höchstentfernung zum Boden oder kleiner ist als die Mindestentfernung zum Boden, die Bewegung des Tragrahmens (20) anhält und die Motoranordnung (22) selektiv so antreibt, dass sie abbiegt.

2. Ferngesteuerter elektrischer Golftaschenwagen nach Anspruch 1, wobei
die Räderanordnung ein Set von Vorderrädern (23) und ein Hinterrad (24) aufweist; und
die Motoranordnung (22) mit dem Hinterrad (24) verbunden ist und Folgendes aufweist:
ein Antriebselement (221), welches das Hinterrad (24) so antreibt, dass es sich dreht;
ein Bremselement (222), welches die Drehung des Hinterrads (24) anhält; und
ein Umlenkelement (223), das eine Bewegungsrichtung des Hinterrads (24) ändert.

3. Ferngesteuerter elektrischer Golftaschenwagen nach Anspruch 1, wobei das Antennenset (30) Folgendes aufweist:
eine Befestigungsbasis (31), die sicher auf einer Oberseite einer Vorderseite des Tragrahmens (20) befestigt ist;
mehrere Antenneneinheiten (32), die sicher und aufrecht auf der Befestigungsbasis (31) befestigt sind und der Vorderseite, der linken Seite, der rechten Seite, einer linken Vorderseite bzw. einer rechten Vorderseite des Tragrahmens (20) zugewandt sind; und
eine Antennenschalteinheit (33), die elektrisch mit den Antenneneinheiten (32) verbunden ist.

4. Ferngesteuerter elektrischer Golftaschenwagen nach Anspruch 3, wobei
das Steuermodul (40) eine Antennensteuereinheit (41) aufweist, die elektrisch mit der Antennenschalteinheit (33) verbunden ist, um die von den jeweiligen Antenneneinheiten (32) empfangenen Entfernungsmesssignale zu erfassen, nach dem Erkennen einer Feldstärke des empfangenen Entfernungsmesssignals von jeder Antenneneinheit (32) gemäß einer Feldstärke des empfangenen Entfernungsmesssignals jeder Antenneneinheit (32) eine Ausrichtung der Fernbedienung (10) bezogen auf das Antennenset (30) bestimmt, die Entfernung zwischen der Fernbedienung (10) und dem Antennenset (30) berechnet und einen entsprechenden Ausrichtungsbezugspunkt und einen entsprechenden Entfernungsbezugspunkt ausgibt; und
das BCM (42) elektrisch mit der Antennensteuereinheit (41) und dem Antriebselement (221), dem Bremselement (222) und dem Umlenkelement (223) der Motoranordnung (22) verbunden ist und mit der Mindestentfernung eingebaut ist, nach dem Empfangen des von der Antennensteuereinheit (41) ausgegebenen Ausrichtungsbezugspunkts und Entfernungsbezugspunkts bestimmt, ob eine Entfernung, die dem Entfernungsbezugspunkt entspricht, größer ist als die Mindestentfernung, wenn positiv, das Antriebselement (221) und das Umlenkelement (223) der Motoranordnung (22) für den Tragrahmen (20) so antreibt, dass sie sich in Richtung einer dem Ausrichtungsbezugspunkt entsprechenden Ausrichtung der Fernbedienung (10) vorwärts bewegen, weiterhin den Ausrichtungsbezugspunkt und den Entfernungsbezugspunkt empfängt und, wenn eine dem empfangenen Entfernungsbezugspunkt entsprechende Entfernung nicht größer ist als die Mindestentfernung, das Bremselement (222) der Motoranordnung (22) aktiviert, um die Vorwärtsbewegung des Tragrahmens (20) anzuhalten.

5. Ferngesteuerter elektrischer Golftaschenwagen nach einem der Ansprüche 2 bis 4, wobei
die Fernbedienung (10) mit einem Beschleunigungsbefehl und einem Verlangsamungsbefehl eingebaut ist und mehrere Tasten (11) aufweist, um dem Beschleunigungsbefehl und dem Verlangsamungsbefehl zu entsprechen, so dass die Fernbedienung (10) bedient wird, um den Beschleunigungsbefehl oder den Verlangsamungsbefehl zu senden, und das Antennenset (30) den von der Fernbedienung (10) gesendeten Beschleunigungsbefehl oder Verlangsamungsbefehl empfängt; und
das BCM (42) mit mehreren Geschwindigkeitsniveaus eingebaut ist und das Antriebselement (221) gemäß einem der Geschwindigkeitsniveaus antreibt, beim Empfangen des von der Fernbedienung (10) gesendeten Beschleunigungsbefehls eine Bewegungsgeschwindigkeit des Antriebselements (221) von einem aktuellen Geschwindigkeitsniveau auf ein nächsthöheres Geschwindigkeitsniveau erhöht und beim Empfangen des von der Fernbedienung (10) gesendeten Verlangsamungsbefehls die Bewegungsgeschwindigkeit des Antriebselements (221) vom aktuellen Geschwindigkeitsniveau auf ein nächstniedrigeres Geschwindigkeitsniveau verringert.

6. Ferngesteuerter elektrischer Golftaschenwagen nach einem der Ansprüche 2 bis 5, wobei
die Fernbedienung (10) mit einem Linksabbiegebefehl und einem Rechtsabbiegebefehl eingebaut ist und mehrere Tasten (11) aufweist, um dem Linksabbiegebefehl und dem Rechtsabbiegebefehl zu entsprechen, so dass die Fernbedienung (10) bedient wird, um den Linksabbiegebefehl oder den Rechtsabbiegebefehl zu senden, und das Antennenset (30) den von der Fernbedienung (10) gesendeten Linksabbiegebefehl oder Rechtsabbiegebefehl empfängt; und
das BCM (42) das Umlenkelement (223) antreibt, um den Tragrahmen (20) beim Empfangen des von der Fernbedienung (10) gesendeten Linksabbiegebefehls oder Rechtsabbiegebefehls nach links oder nach rechts abbiegen zu lassen.

7. Ferngesteuerter elektrischer Golftaschenwagen nach Anspruch 5 oder 6, wobei das von der Fernbedienung (10) gesendete Entfernungsmesssignal ein Funksignal im 2,4-GHz-ISM-Band ist.

## Revendications

1. Chariot de golf électrique télécommandé comprenant :
une télécommande (10) transmettant un signal de mesure de distance ;
une structure porteuse (20) comportant un ensemble roue, un socle de sac de golf (21) et un ensemble moteur (22), l'ensemble moteur (22) étant raccordé à l'ensemble roue pour entraîner l'ensemble roue ; et
un jeu d'antennes (30) monté sur la structure porteuse (20), comportant de multiples unités d'antenne (32) orientées vers au moins un côté avant, un côté gauche, un côté droit de la structure porteuse (20), et recevant le signal de mesure de distance transmis par la télécommande (10) avec les unités d'antenne (32) ;
le chariot de golf électrique télécommandé comprenant en outre :
un jeu d'émetteurs-récepteurs ultrasonores (50) monté sur un fond du côté avant de la structure porteuse (20) transmettant des ondes ultrasonores au sol et recevant des ondes réfléchies ; et
un module de commande (40) monté sur la structure porteuse (20), raccordé électriquement au jeu d'antennes (30) et à l'ensemble moteur (22), et établissant une distance minimale, déterminant une orientation de la télécommande (10) par rapport au jeu d'antennes (30) après acquisition du signal de mesure de distance reçu en provenance du jeu d'antennes (30), calculant une distance entre la télécommande (10) et le jeu d'antennes (30), et comparant la distance à la distance minimale, et si la distance est supérieure à la distance minimale, commandant à l'ensemble moteur (22) d'entraîner l'ensemble roue pour que la structure porteuse (20) s'approche de la télécommande (10), le module de commande comportant :
une unité de commande ultrasonore (43) raccordée électriquement au jeu d'émetteurs-récepteurs ultrasonores (50), calculant une distance du jeu d'émetteurs-récepteurs ultrasonores (50) au-dessus du sol après que le jeu d'émetteurs-récepteurs ultrasonores (50) transmet une onde ultrasonore et reçoit une onde réfléchie, et produisant en sortie la distance au-dessus du sol ; et
un module de commande de corps (BCM) (42) raccordé électriquement à l'ensemble moteur (22) et à l'unité de commande ultrasonore (43), intégré avec une distance maximale par rapport au sol et une distance minimale par rapport au sol, recevant en continu une distance au-dessus du sol et comparant la distance au-dessus du sol à la distance maximale par rapport au sol et à la distance minimale par rapport au sol lorsque l'ensemble moteur (22) entraîne la structure porteuse (20) pour avancer, commandant à l'ensemble moteur (22) d'entraîner en continu la structure porteuse (20) pour avancer lorsque la distance au-dessus du sol tombe entre la distance maximale par rapport au sol et la distance minimale par rapport au sol, arrêtant le déplacement de la structure porteuse (20) et entraînant sélectivement l'ensemble moteur (22) à tourner lors de la détermination que la distance au-dessus du sol est supérieure à la distance maximale par rapport au sol ou inférieure à la distance minimale par rapport au sol.

2. Chariot de golf électrique télécommandé selon la revendication 1, dans lequel
l'ensemble roue comporte un ensemble de roues avant (23) et une roue arrière (24) ; et
l'ensemble moteur (22) est raccordé à la roue arrière (24) et comporte :
un élément d'entraînement (221) entraînant la roue arrière (24) à entrer en rotation ;
un élément de frein (222) arrêtant la rotation de la roue arrière (24) ; et
un élément de déviation (223) modifiant une direction de déplacement de la roue arrière (24).

3. Chariot de golf électrique télécommandé selon la revendication 1, dans lequel le jeu d'antennes (30) comporte :
une base de montage (31) montée solidement sur un dessus d'un côté avant de la structure porteuse (20) ;
de multiples unités d'antenne (32) montées solidement et de façon dressée sur la base de montage (31) et orientées respectivement vers le côté avant, le côté gauche, le côté droit, un côté avant gauche et un côté avant droit de la structure porteuse (20) ; et
une unité de commutation d'antenne (33) raccordée électriquement aux unités d'antenne (32).

4. Chariot de golf électrique télécommandé selon la revendication 3, dans lequel
le module de commande (40) comporte une unité de commande d'antenne (41) raccordée électriquement à l'unité de commutation d'antenne (33) pour acquérir des signaux de mesure de distance reçus en provenance des unités d'antenne (32) respectives, déterminant une orientation de la télécommande (10) par rapport au jeu d'antennes (30) selon une intensité de champ du signal de mesure de distance reçu de chaque unité d'antenne (32) après détection de l'intensité de champ du signal de mesure de distance reçu en provenance de chaque unité d'antenne (32), calculant la distance entre la télécommande (10) et le jeu d'antennes (30), et produisant en sortie une donnée d'orientation correspondante et une donnée de distance correspondante ; et
le BCM (42) est raccordé électriquement à l'unité de commande d'antenne (41) et à l'élément d'entraînement (221), l'élément de frein (222) et l'élément de déviation (223) de l'ensemble moteur (22), et intégré avec la distance minimale, déterminant si une distance correspondant à la donnée de distance est supérieure à la distance minimale après réception de la donnée d'orientation et la donnée de distance produites en sortie par l'unité de commande d'antenne (41), si oui, entraînant l'élément d'entraînement (221) et l'élément de déviation (223) de l'ensemble moteur (22) pour la structure porteuse (20) à avancer vers une orientation de la télécommande (10) correspondant à la donnée d'orientation, maintenant la réception de la donnée d'orientation et de la donnée de distance, et si une distance correspondant à la donnée de distance reçue n'est pas supérieure à la distance minimale, activant l'élément de frein (222) de l'ensemble moteur (22) pour arrêter l'avancée de la structure porteuse (20).

5. Chariot de golf électrique télécommandé selon l'une quelconque des revendications 2 à 4, dans lequel
la télécommande (10) est intégrée avec une commande d'accélération et une commande de décélération et comporte de multiples boutons (11) pour correspondre à la commande d'accélération et à la commande de décélération de sorte que la télécommande (10) soit actionnée pour transmettre la commande d'accélération ou la commande de décélération et que le jeu d'antennes (30) reçoive la commande d'accélération ou la commande de décélération transmise par la télécommande (10) ; et
le BCM (42) est intégré avec de multiples niveaux de vitesse et entraîne l'élément d'entraînement (221) selon l'un des niveaux de vitesse, augmente une vitesse de déplacement de l'élément d'entraînement (221) d'un niveau de vitesse actuel à un niveau de vitesse suivant supérieur lors de la réception de la commande d'accélération transmise par la télécommande (10), et diminue la vitesse de déplacement de l'élément d'entraînement (221) du niveau de vitesse actuel à un niveau de vitesse suivant inférieur lors de la réception de la commande de décélération transmise par la télécommande (10).

6. Chariot de golf électrique télécommandé selon l'une quelconque des revendications 2 à 5, dans lequel
la télécommande (10) est intégrée avec une commande de virage à gauche et une commande de virage à droite et comporte de multiples boutons (11) pour correspondre à la commande de virage à gauche et à la commande de virage à droite de sorte que la télécommande (10) soit actionnée pour transmettre la commande de virage à gauche ou la commande de virage à droite et que le jeu d'antennes (30) reçoive la commande de virage à gauche ou la commande de virage à droite transmise par la télécommande (10) ; et
le BCM (42) entraîne l'élément de déviation (223) pour tourner la structure porteuse (20) à gauche ou à droite lors de la réception de la commande de virage à gauche ou de la commande de virage à droite transmise par la télécommande (10).

7. Chariot de golf électrique télécommandé selon la revendication 5 ou 6, dans lequel le signal de mesure de distance transmis par la télécommande (10) est un signal radio dans la bande ISM de 2,4 GHz.
